# FASCICULE DE BREVET EUROPEEN

(11) **EP 0 530 108 B1**
(45) Date de publication et mention de la délivrance du brevet: **18.09.1996**
(21) Numéro de dépôt: 92402359.1
(22) Date de dépôt: 28.08.1992
(51) Int. Cl.: G02B 6/34, H01S 3/06

(54) **Dispositif séparateur-mélangeur de fréquences pour ondes optiques guidées**
Frequenz Trenn-Misch Vorrichtung für geführte optische Wellen
Frequency separation-mixing device for guided optical waves

(30) Priorité: 30.08.1991 FR 9110788
(43) Date de publication de la demande: 03.03.1993
(73) Titulaire: ALCATEL ALSTHOM COMPAGNIE GENERALE D'ELECTRICITE, F-75382 Paris Cédex 08 (FR)
(72) Inventeur: Bousselet, Philippe, F-91630 Leudeville (FR)
(74) Mandataire: Bourely, Paul

(56) Documents cités:
- ELECTRONICS LETTERS. vol. 26, no. 17, 16 Août 1990, STEVENAGE GB pages 1397 - 1398 Y. MIYAJIMA ET AL. 'EFFICIENT 1.3um-BAND AMPLIFICATION IN A Nd3+ -DOPED SINGLE-MODE FLUORIDE FIBRE'
- Components for Fiber Optic Applications V, 1990, SPIE, Volume 1365, SPIE, Bellingham, US, P.A. NAGY et al.: Multiplexers for Optical Fiber Amplifiers page 33-37

## Description

La présente invention concerne le mélange et/ou la séparation d'ondes optiques de fréquences différentes guidées par des fibres optiques. De tels mélange et séparation sont fréquemment appelés multiplexage et démultiplexage, et ces fréquences seront appelées ci-après basse et haute fréquences.

Elle trouve plus particulièrement application lors de la réalisation de lignes de transmission d'information à grandes distances constituées par des fibres optiques. Cette invention s'applique alors pour effectuer le mélange entre d'une part une onde basse fréquence porteuse d'information et guidée par une fibre optique que l'on peut appeler guide ou fibre basse fréquence, et d'autre part une lumière de pompage optique constituant l'onde haute fréquence et guidée par une autre fibre optique que l'on peut appeler guide ou fibre haute fréquence. L'onde porteuse et la lumière de pompage doivent être mélangées dans une fibre amplificatrice pour amplifier cette onde porteuse.

Dans ce cas un dispositif selon l'invention constitue un mélangeur dont la fonction est de réaliser ce mélange et qui doit pour cela être adapté aussi parfaitement que possible aux fréquences basse et haute. Ce dispositif doit alors aussi constituer un séparateur pour les raisons suivantes : d'une part, une fraction de l'onde porteuse peut être rétrodiffusée vers le dispositif par des éléments situés dans la fibre amplificatrice ou en aval de celle-ci. En raison de l'adaptation du dispositif aux fréquences basse et haute la quasi totalité de cette fraction ressort alors du dispositif vers la fibre basse fréquence. Cependant en raison d'une adaptation imparfaite du dispositif aux fréquences basse et haute, une petite fraction de cette fraction ressort du dispositif vers la fibre haute fréquence en sortie de laquelle elle peut perturber la source de lumière de pompage. D'autre part une partie de la lumière de pompage peut elle aussi être rétrodiffusée. Elle peut alors, pour des raisons analogues, traverser le dispositif non seulement vers la fibre haute fréquence, mais aussi vers la fibre basse fréquence où elle présente des inconvénients. Le dispositif doit donc constituer un séparateur dont la fonction est de minimiser d'une part la fraction de l'onde porteuse renvoyée dans la fibre haute fréquence, d'autre part la fraction de la lumière de pompage renvoyée dans la fibre basse fréquence. Une qualité du séparateur constitué par ce dispositif est donc représentée par un coefficient d'isolation entre ports, ce coefficient étant le rapport entre d'une part l'intensité de cette onde porteuse renvoyée dans la fibre haute fréquence, ou l'intensité de la lumière de pompage renvoyée dans la fibre basse fréquence à partir du dispositif, et d'autre part l'intensité de cette onde porteuse ou de cette lumière de pompage rétrodiffusées vers ce dispositif, respectivement. Ce coefficient est habituellement exprimé en décibels et la qualité du dispositif est d'autant plus grande que ce coefficient est plus grand.

Une autre qualité de ce dispositif est représentée par un coefficient de perte d'insertion qui est le rapport entre l'intensité d'une onde ou de plusieurs ondes d'une même fréquence arrivant dans ce dispositif et l'intensité de la ou des ondes transmises par ce dispositif à cette même fréquence dans la ou les fibres prévues pour les guider. Ce coefficient est lui aussi exprimé habituellement en décibels. Cette qualité du dispositif peut être appelée sa transparence. Elle est d'autant plus grande que le coefficient de perte d'insertion est plus petit.

Une autre qualité de ce dispositif est sa bande passante c'est-à-dire la largeur de la bande spectrale que l'une desdites ondes, par exemple l'onde porteuse, peut occuper sans diminution sensible des qualités précédentes.

Une autre qualité encore de ce dispositif est sa puissance transmissible c'est-à-dire la puissance des ondes qu'il peut transmettre sans détérioration.

Une autre qualité enfin est la robustesse de ce dispositif c'est-à-dire sa fiabilité et sa durabilité dans des conditions d'utilisation sévères par exemple dans un amplificateur intermédiaire d'une ligne de transmission sous-marine.

Un premier dispositif séparateur-mélangeur de fréquences pour ondes optiques guidées connu utilise des filtres fréquentiels et des collages entre ces filtres et des fibres optiques. Il est connu comme dispositif JDS et décrit notamment dans l'article suivant : COMPARISON OF WDM COUPLER TECHNOLOGIES FOR USE IN EDFA SYSTEMS A. LORD and al, Electronics letters, 21/06/90, volume 26 n° 13, p.900 et 901.

Les nombreuses expérimentations effectuées sur des réalisations de ce dispositif montrent la valeur typique du coefficient de perte d'insertion égale à 0,7 dB, et celle du coefficient d'isolation entre ports supérieure à 20 dB.

Ce dispositif présente les inconvénients suivants :
- coefficient de perte d'insertion élevé, comme indiqué ci-dessus,
- faible puissance transmissible, inférieure à 100 mW,
- faible robustesse en raison de l'utilisation de collages dont la qualification pour un usage en milieu sous-marin s'avère délicate.

Il présente les avantages suivants :
- coefficient d'isolation entre ports élevé, comme indiqué ci-dessus,
- bande passante convenable.

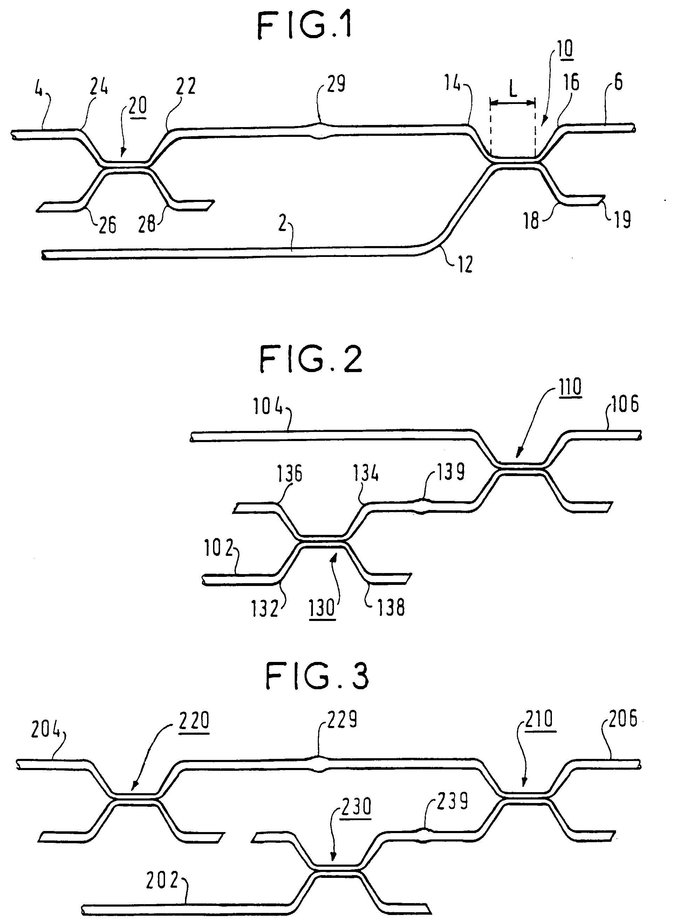

Un deuxième dispositif de ce genre connu est parfois désigné comme dispositif Gould. Il utilise un coupleur du type à ondes évanescentes. Ce coupleur est constitué de deux fibres optiques qui peuvent par exemple, en entrée, guider et confiner chacune une onde. Ces deux fibres sont soudées côte à côte sur une longueur d'interaction optique L (voir figure 1) de manière que l'onde évanescente associée à l'onde confinée dans chaque fibre pénétre dans l'autre fibre. Compte tenu d'un coefficient de couplage linéique entre les deux fibres, chaque onde se'retrouve en sortie dans l'une ou l'autre fibre dans une proportion définie par une fonction sinusoïdale de cette longueur d'interaction rapportée à la longueur d'onde de cette onde. Un choix convenable de cette longueur d'interaction, notamment, permet donc d'orienter en sortie chaque onde vers la fibre que l'on souhaite, ce choix constituant l'adaptation précédemment mentionnée de ce dispositif aux fréquences de ces ondes.

Ce deuxième dispositif connu et un tel coupleur sont décrits notamment dans l'article suivant :
WAVELENGTH DIVISION MULTIPLEXERS FOR EDFA, P.A. NAGY and al, SPIE OE/FIBERS' 90 vol.1365, Components for fibers optic application V, San Jose California.

Ce deuxième dispositif connu présente les inconvénients suivants :
- coefficient d'isolation entre ports insuffisant pour certaines applications : au plus égal à 18 dB (pour les derniers composants mesurés),
- bande passante trop étroite.

Il présente les avantages suivants :
- meilleur coefficient de perte d'insertion, valeur typique égale à 0,2 dB,
- forte puissance transmissible, supérieure à 100 mW,
- bonne robustesse en raison de l'absence de collage, tous les raccordements et couplages étant réalisés par soudure de fibres, soit bout à bout pour le raccordement, soit latéralement pour le couplage.

Une réalisation particulière de ce deuxième dispositif connu est décrite dans un article - ELECTRONICS LETTERS - vol. 26, no. 17, 16 Août 1990, STEVENAGE GB pages 1397-1398;
Y. MIYAJIMA ET AL: "EFFICIENT 1,3 m-BAND AMPLIFICATION IN A Nd3+ -DOPED SINGLE-MODE FLUORIDE FIBRE".

Selon cet article, un coupleur en ondes évanescentes, qui peut être appelé coupleur d'orientation, raccorde deux fibres basse et haute fréquences à une fibre amplificatrice. Il est complété par deux autres coupleurs du même type qui sont insérés en série avec la fibre amplificatrice pour évacuer une onde parasite engendrée dans cette fibre à une fréquence différente desdites fréquences basse et haute.

La présente invention a notamment pour but de réaliser un dispositif mélangeur-séparateur de fréquences pour ondes optiques guidées permet an d'obtenir tous les avantages tout en évitant tous les inconvénients indiqués ci-dessus.

A cet effet, la présente invention a pour objet un dispositif mélangeur-séparateur de fréquences pour ondes optiques guidées, tel que défini à la revendication 1.

Ainsi, le dispositif selon l'invention comporte non seulement un coupleur d'orientation du type à ondes évanescentes présentant une sélectivité en fréquences pour orienter lesdites ondes optiques vers des guides correspondants mais aussi au moins un coupleur d'évacuation de ce type inséré en série entre ce coupleur d'orientation et au moins l'un de ces guides pour transmettre sélectivement une onde correspondant à ce guide.

A l'aide des figures schématiques ci-jointes, on va décrire plus particulièrement ci-après, à titre d'exemple non limitatif, comment la présente invention peut être mise en oeuvre.

La figure 1 représente une vue d'un premier dispositif selon cette invention.

La figure 2 représente une vue d'un deuxième dispositif selon cette invention.

La figure 3 représente une vue d'un troisième dispositif selon cette invention.

Conformément à la figure 1 le premier dispositif selon l'invention comporte les éléments suivants qui sont connus parce qu'ils font parties du deuxième dispositif connu mentionné ci-dessus :
- un guide optique 2 pour guider une onde lumineuse présentant une bande de fréquences et constituant une onde basse fréquence, ce guide optique 2 constituant un guide basse fréquence,
- un guide optique 4 pour guider une onde lumineuse qui présente une bande de fréquences au-dessus de celle de cette onde basse fréquence et qui constitue une onde haute fréquence, ce guide optique 4 constituant un guide haute fréquence,
- un guide optique 6 pour guide à la fois lesdites ondes basse et haute fréquences, ce guide optique 6 constituant un guide mixte,
- et un coupleur optique à ondes évanescentes 10 présentant trois branches d'insertion 12, 14, 16 le raccordant respectivement aux trois dits guides basse fréquence 2, haute fréquence 4 et mixte 6, et une quatrième branche constituant une branche d'évacuation 18 et ne renvoyant pas de lumière vers ce coupleur.

Ce coupleur constitue un coupleur d'orientation. Sa longueur d'interaction optique L est choisie pour que la propagation des ondes basse et haute fréquence respectivement dans les guides basse et haute fréquence s'accompagne d'une propagation simultanée de ces deux ondes dans le guide mixte. C'est-à-dire que cette longueur optique est telle que, selon les applications, on obtienne autant que possible l'un ou l'autre ou les deux résultats suivants.

Dans une application qui utilise un mélangeur et dans laquelle les ondes basse et haute fréquence sont injectées sélectivement dans les guides basse et haute fréquences, respectivement, à distance du coupleur 10 et vers celui-ci, le résultat recherché est que ces deux ondes se retrouvent mélangées dans le guide 6, aucune onde ne devant être envoyée dans la branche 18. Dans une application qui utilise un séparateur et dans laquelle les deux ondes se propagent ensemble dans le guide 6 vers le coupleur 10, le résultat recherché est que l'onde basse fréquence soit injectée par le coupleur 10 dans le seul guide 2 et l'onde haute fréquence dans le seul guide 4, la branche 18 ne devant là encore recevoir aucune onde.

En pratique, une fraction parasite et petite de chaque onde se retrouve dans chacun des guides et branches du coupleur, les fractions parasites étant celles qui vont dans un autre guide ou branche que celui ou celle qui doit les recevoir, et étant d'autant plus petites que les qualités d'isolation entre ports et/ou de transparence sont plus grandes. Pour éviter le renvoi de lumière parasite dans le coupleur à partir de la branche d'évacuation 18, cette branche se termine, de même que toute les branches d'évacution dont il sera question ci-après, par un clivage oblique symbolisé par un trait incliné 19.

Selon la présente invention le dispositif comporte au moins un autre coupleur optique à ondes évanescentes 20. Cet autre coupleur présente deux branches d'insertion 22, 24 par lesquelles il est raccordé en série entre le coupleur d'orientation 10 et l'un des deux dits guides basse et haute fréquence, ce guide étant par exemple le guide 4 et constituant un guide isolé. Il présente en outre deux branches d'évacuation 26, 28 ne renvoyant pas de lumière vers ce coupleur. Il constitue un coupleur d'évacuation 20 présentant une longueur d'interaction optique choisie pour transmettre entre ses deux branches d'insertion l'onde optique qui doit être guidée par ledit guide isolé et pour diriger une composante parasite de l'autre onde optique vers l'une de ses branches d'évacuation.

De préférence les guides optiques 2, 4, 6 et branches 12, 14, 16, 18, 22, 24, 26, 28 sont des fibres optiques ou des tronçons de telles fibres, les coupleurs à ondes évanescentes 10, 20 étant constitués chacun par deux fibres optiques soudées côte à côte conformément au type dit à fusion-étirage.

Le guide basse fréquence 2 est par exemple un tronçon d'une fibre de ligne d'une ligne de transmission à fibres optiques. Le guide haute fréquence 4 est une fibre d'injection de pompe alimentée par une source locale d'une lumière de pompage optique constituant ladite onde haute fréquence, et le guide mixte 6 est une fibre amplificatrice insérée dans cette fibre de ligne et comportant un élément de dopage excitable par cette lumière de pompage pour amplifier ladite onde basse fréquence.

L'onde basse fréquence est par exemple une onde porteuse occupant une bande spectrale autour d'une longueur d'onde de 1550 nm. L'onde haute fréquence présente une longueur d'onde de 980 ou 1480 nm et le guide mixte 6 est une fibre amplificatrice dopée à l'erbium.

Le dispositif est réalisé, à partir de deux coupleurs à ondes évanescentes, à l'aide d'une seule soudure de raccordement 29.

Sur les figures 2 et 3 des éléments analogues, par leurs fonctions et dénominations, à ceux de la figure 1 ou pour la figure 3, à ceux de la figure 2, sont désignés par les mêmes numéros de référence complétés par un chiffre de centaines qui est 1 pour la figure 2 et qui est 2 pour la figure 3.

Le deuxième dispositif représenté à la figure 2 comporte lui aussi un coupleur d'évacuation 130 tel que décrit et il différe du premier dispositif par le fait que le guide isolé est le guide basse fréquence 102 au lieu d'être le guide haute fréquence 4. Les éléments désignés par les numéros de référence 132, 134, 136, 130, 139 ont des dénominations et des fonctions similaires à celles des éléments 22, 24, 26, 20 et 29 respectivement.

Le troisième dispositif représenté à la figure 3 comporte deux coupleurs d'évacuation 220 et 230, de sorte que les deux guides à fréquences uniques 202 et 204 constituent deux dits guides isolés.

La présente invention permet d'obtenir un coefficient d'isolation entre ports au moins égal à 25 dB entre le guide mixte et le ou les guides isolés. Quant à la bande passante mesurée entre les mêmes guides, elle est notablement plus grande que celle du deuxième dispositif connu précédemment mentionné.

Les soudures telles que 29, 139, 229 et 239 peuvent être supprimées dans le cas d'une fabrication industrielle du dispositif selon cette invention, grâce à l'utilisation d'une même fibre lors de la réalisation de deux coupleurs à ondes évanescentes. On peut diminuer ainsi le coefficient de perte d'insertion.

## Revendications

1. Dispositif mélangeur-séparateur de fréquences pour ondes optiques guidées 1, comportant :
- un premier guide optique (2;102;202) pour guider une onde optique basse fréquence, ce premier guide optique constituant un guide basse fréquence,
- un deuxieme guide optique (4;104,204) pour guider une onde optique qui présente une fréquence au-dessus de celle de cette onde basse fréquence et qui constitue une onde haute fréquence, ce deuxiéme guide optique constituant un guide haute fréquence,
- un troisième guide optique (6;106;206) pour guider à la fois lesdites ondes basse et haute fréquences, ce guide troisième optique constituant un guide mixte,
- un premier coupleur optique à ondes évanescentes (10;110;210) présentant trois branches d'insertion (12, 14, 16) le raccordant respectivement aux dits trois guides basse fréquence (2;102;202), haute fréquence (4;104;204) et mixte (6;106;206), et une quatrième branche (18), ce premier coupleur (10;110;210) constituant un coupleur d'orientation présentant une longueur d'interaction optique adaptée aux dites basse et haute fréquences pour que la propagation desdites ondes basse et haute fréquence respectivement dans lesdits guides basse et haute fréquence s'accompagne d'une propagation simultanée de ces deux ondes dans ledit guide mixte, ladite quatrième branche de ce coupleur constituant une branche d'évacuation (18) ne renvoyant pas d'onde basse ou haute fréquence vers ce coupleur,
- et au moins un deuxiéme coupleur optique à ondes évanescentes (20;130;220;230) présentant deux branches d'insertion (24;22;132;134) au moyen desquelles il est inséré en série sur l'un desdits trois guides optiques, et deux branches d'evacuation (26,28;136,138) pour évacuer une onde optique,
ce dispositif étant caractérisé par le fait que le deuxiéme coupleur optique (20;130;220,230) est raccordé par ses deux dites branches d'insertion (22, 24;132,134) en série sur l'un desdits deux guides à basse et haute fréquence, les deux dites branches d'évacuation (26, 28; 136,138) de ce deuxiéme coupleur étant agencées pour ne renvoyer aucune onde vers ce deuxiéme coupleur, ce deuxiéme coupleur constituant un coupleur d'évacuation (20) présentant une longueur d'interaction optique adaptée aux dites basse et haute fréquences pour transmettre entre ses deux branches d'insertion celle des deux dites ondes basse ou haute fréquence qui doit être guidée par ledit guide sur lequel ledit deuxiéme coupleur est inséré et pour diriger une composante parasite de l'autre de ces deux ondes vers l'une de ses branches d'évacuation, la partie dudit guide ainsi raccordée audit deuxiéme coupleur qui s'étend au-delà de ce dernier par rapport au premier coupleur constituant ainsi une partie de guide isolée.

2. Dispositif selon la revendication 1, dans lequel lesdits guides optiques (2, 4, 6;102,104,106;202,204,206) et branches (12,14,16,18,22,24,26,28,132,134,136,138) sont des fibres optiques ou tronçons de telles fibres, lesdits coupleurs à ondes évanescentes (10, 20;110,130;210,220,230) étant constitués chacun par deux fibres optiques soudées côte à côte conformément au type dit à fusion-étirage.

3. Dispositif selon la revendication 1, dans lequel ledit guide basse fréquence (2;102;202) est un tronçon d'une fibre de ligne d'une ligne de transmission à fibre optique prévue pour guider ladite onde basse fréquence cette onde basse fréquence étant porteuse d'une information à transmettre, ledit guide haute fréquence (4;104;204) est une fibre d'injection de pompe alimentée par une source locale d'une lumière de pompage optique constituant ladite onde haute fréquence, et ledit guide mixte (6;106;206) est une fibre amplificatrice constituant un autre tronçon de fibre de ligne et comportant un élément de dopage excitable par cette lumière de pompage pour amplifier ladite onde basse fréquence.

## Patentansprüche

1. Vorrichtung zum Mischen oder Trennen von Frequenzen für geführte Lichtwellen
- mit einem ersten Lichtleiter (2; 102; 202), um eine Lichtwelle mit niedrigerer Frequenz zu führen, so daß dieser erste Lichtleiter einen Lichtleiter mit niedrigerer Frequenz bildet,
- mit einem zweiten Lichtleiter (4; 104; 204), der eine Lichtwelle mit einer Frequenz oberhalb der der Lichtwelle mit niedrigerer Frequenz führt, die Lichtwelle mit höherer Frequenz genannt wird, so daß dieser zweite Lichtleiter einen Lichtleiter mit höherer Frequenz bildet,
- mit einem dritten Lichtleiter (6; 106; 206), der sowohl die Wellen mit niedrigerer als auch mit höherer Frequenz führt und einen sogenannten Mischleiter bildet,
- mit einem ersten optischen Koppler vom Schwundwellentyp (10; 110; 210) mit drei Einfügungszweigen (12, 14, 16), die den Koppler an den Lichtleiter mit niedrigerer Frequenz (2; 102; 202), den Lichtleiter mit höherer Frequenz (4; 104; 204) bzw. den Mischleiter (6; 106; 206) anschließt, und mit einem vierten Zweig (18), wobei der erste Koppler (10; 110; 210) einen Orientierungskoppler mit einer optischen Wechselwirkungslänge bildet, die an die niedrigere und die höhere Frequenz angepaßt ist, damit die Ausbreitung der Wellen mit niedrigerer und höherer Frequenz in den entsprechenden Lichtleitern niedrigerer und höherer Frequenz von einer gleichzeitigen Ausbreitung dieser beiden Wellen in dem Mischleiter begleitet wird, und wobei der vierte Zweig dieses Kopplers einen Ableitungszweig (18) bildet, der die Wellen mit niedrigerer oder höherer Frequenz nicht zum Koppler reflektiert,
- und mit mindestens einem zweiten optischen Koppler (20; 130; 220, 230) vom Schwundwellentyp, der zwei einfügungszweige (24, 22; 132, 134), über die der Koppler in Reihe in einen der drei Lichtleiter eingefügt ist, und zwei Ableitungszweige (26, 28; 136, 138) zur Ableitung einer Lichtwelle besitzt,
dadurch gekennzeichnet, daß der zweite optische Koppler (20; 130; 220, 230) über seine beiden Einfügungszweige (22, 24, 132, 134) in Reihe in einen der Lichtleiter mit niedrigerer oder höherer Frequenz eingefügt ist, wobei die beiden Ableitungszweige (26, 28; 136, 138) dieses zweiten Kopplers so ausgebildet sind, daß sie keine Welle zum zweiten Koppler reflektieren, wobei der zweite Koppler einen Ableitungskoppler (20) bildet, dessen optische Wechselwirkungslänge an die niedrigere und höhere Frequenz angepaßt ist, um zwischen seinen beiden Einfügungszweigen diejenige der beiden Wellen mit niedrigerer oder höherer Frequenz zu übertragen, die von dem Lichtleiter geführt werden soll, in den der zweite Koppler eingefügt ist, und um eine Störkomponente der anderen dieser beiden Wellen an einen der Ableitungszweige zu übertragen, so daß der Teil des so an den zweiten Koppler angeschlossenen Lichtleiters, der sich über diesen letzteren bezüglich des ersten Kopplers hinaus erstreckt, einen isolierten Lichtleiterabschnitt bildet.

2. Vorrichtung nach Anspruch 1, bei der die Lichtleiter (2, 4, 6; 102, 104, 106; 202, 204, 206) und die Zweige (12, 14, 16, 18, 22, 24, 26, 28; 132, 134, 136, 138) Lichtleitfasern oder Abschnitte von solchen Fasern sind, wobei die Koppler (10, 20; 110, 130; 210, 220, 230) vom Schwundwellentyp je aus zwei Lichtleitfasern bestehen, die Seite an Seite gemäß einem Schmelz-Ziehverfahren aneinander befestigt sind.

3. Vorrichtung nach Anspruch 1, in der der Lichtleiter mit niedrigerer Frequenz (2; 102; 202) ein Abschnitt einer Lichtleitfaser einer Lichtfaser-Übertragungsleitung ist, die die Welle mit niedrigerer Frequenz führen soll, welche eine zu übertragende Information trägt, während der Lichtleiter mit höherer Frequenz (4; 104; 204) eine Faser zur Einspeisung einer von einer örtlichen Pumplichtquelle kommenden Pumpwelle ist, die die Welle mit höherer Frequenz bildet, während der Mischleiter (6; 106; 206) eine Faser mit Verstärkungswirkung ist, die einen anderen Abschnitt der Leitungsfaser bildet und ein Dotierungselement besitzt, das durch das Pumplicht angeregt werden kann, um die Welle mit niedrigerer Frequenz zu verstärken.

## Claims

1. Frequency mixer-and-separator apparatus for guided optical waves, including:
a first optical waveguide (2; 102; 202) for guiding a low-frequency optical wave, this first optical waveguide constituting a low-frequency waveguide;
a second optical waveguide (4; 104; 204) for guiding an optical wave which has a frequency band above the frequency band of the low-frequency wave, and which constitutes a high-frequency wave, this second optical waveguide constituting a high-frequency waveguide;
a third optical waveguide (6; 106; 206) for guiding said low-frequency wave and said high-frequency wave simultaneously, this third optical waveguide constituting a mixed waveguide;
a first evanescent-wave optical coupler (10; 110; 210) having three insertion branches (12, 14, 16) which connect it to said low-frequency waveguide (2; 102; 202), to said high-frequency waveguide (4; 104; 204), and to said mixed waveguide (6; 106; 206) respectively, and a fourth branch (18), this first coupler (10; 110; 210) constituting a directing coupler having an optical interaction length matched to said low- and high-frequencies so that, when said low-frequency wave and said high-frequency wave propagate respectively in the low-frequency waveguide and in the high-frequency waveguide, the two waves propagate simultaneously in the mixed waveguide, said fourth branch of the coupler constituting a removal branch (18) which does not return any of the low-frequency or high-frequency waves to the coupler; and
at least one second evanescent-wave optical coupler (20; 130; 220, 230) having two insertion branches (24, 22; 132; 134) by means of which it is inserted in series on one of said three optical waveguides, and two removal branches (26, 28; 136, 138) for removing an optical wave;
said apparatus being characterized by the fact that said second optical coupler (20; 130; 220, 230) is connected in series via its said two insertion branches (22, 24; 132, 134) on one of said two low-frequency and high-frequency waveguides, said two removal branches (26, 28; 136, 138) of said second coupler being organized so as not to return any waves towards said second coupler, said second coupler constituting a removal coupler (20) having an optical interaction length matched to said low-and high-frequencies so that one of said low-frequency wave or said high-frequency wave which is to be guided by said waveguide on which said second coupler is inserted is passed to the two insertion branches of said second coupler, and so that an interference component of the other one of the two waves is directed towards one of the removal branches of said second coupler, the portion of said waveguide thus connected to said second coupler and which extends therebeyond relative to the first coupler thus constituting an isolated waveguide portion.

2. Apparatus according to claim 1, in which said optical waveguides (2, 4, 6; 102, 104, 106; 202, 204, 206) and said branches (12, 14, 16, 18, 22, 24, 26, 28; 132, 134, 136, 138) are optical fibers or lengths of such fibers, said evanescent-wave couplers (10, 20; 110, 130; 240, 220, 230) each being constituted by two optical fibers welded side-by-side and of the "fused-and-drawn" type.

3. Apparatus according to claim 1, in which said low-frequency waveguide (2; 102; 202) is a length of a line fiber of an optical-fiber transmission line that is provided for guiding said low-frequency wave, the low-frequency wave carrying data to be transmitted, said high-frequency waveguide (4; 104; 204) is a pump-injection fiber fed by a local source of optical pump light constituting said high-frequency wave, and said mixed waveguide (6; 106; 206) is an amplifying fiber constituting another length of line fiber and including a doping element that can be excited by the pump light so as to amplify said low-frequency wave.
